Europäisches Patentamt

European Patent Office

Office européen des brevets

(19)

(11) **EP 1 598 971 A1**

(12) **EUROPEAN PATENT APPLICATION**
published in accordance with Art. 158(3) EPC

(43) Date of publication:
**23.11.2005 Bulletin 2005/47**

(51) Int Cl.7: **H04J 11/00**

(21) Application number: **04724169.0**

(22) Date of filing: **29.03.2004**

(86) International application number:
**PCT/JP2004/004402**

(87) International publication number:
**WO 2004/088892 (14.10.2004 Gazette 2004/42)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **28.03.2003 JP 2003091748**

(71) Applicant: **MATSUSHITA ELECTRIC INDUSTRIAL
CO., LTD.
Kadoma-shi, Osaka 571-8501 (JP)**

(72) Inventors:
• **YOSHII, Isamu
Chiba 279-0114 (JP)**
• **FUKUOKA, Masaru
Ishikawa 920-0342 (JP)**

(74) Representative: **Grünecker, Kinkeldey,
Stockmair & Schwanhäusser Anwaltssozietät
Maximilianstrasse 58
80538 München (DE)**

(54) **APPARATUS AND METHOD FOR OFDM RECEPTION**

(57)    An interference power calculation section 208 calculates an interference power value of each symbol according to a calculation expression (interference power = average power of parts unaffected by interference + average power of parts affected by interference) and notifies a turbo decoding section 209 of the calculated interference power value. The turbo decoding section 209 calculates $\sigma^2$ used to calculate an LLR of turbo decoding according to a calculation expression ($\sigma^2$ = thermal noise + interference power) based on the interference power value notified from the interference power calculation section 208 and thereby changes $\sigma^2$ based on the interference power value for each symbol notified from the interference power calculation section 208.

FIG.6

**Description**

Technical Field

The present invention relates to an OFDM reception apparatus using OFDM signals and a method thereof, and more particularly, to one suitable for use in an OFDM reception apparatus used in an OFDM system based on a frequency hopping scheme.

Background Art

In a mobile communication system, an OFDM (Orthogonal Frequency Division Multiplexing) scheme using frequency hopping is conventionally under study. An OFDM system using frequency hopping carries out communications using different hopping patterns among a plurality of cells, causing thereby interference among cells to be averaged.

A mobile communication system using a multicarrier scheme including a frequency hopping OFDM scheme adopts a coding scheme premised on MAP (Maximum a posteriori) decoding using a soft decision value such as turbo code or LDPC (Low Density Parity Check) code for coding of transmission information.

Furthermore, turbo code decoding processing assumes that a transmission path is in an AWGN (Additive White Gaussian Noise) environment and derives an LLR (Log Likelihood Ratio) from Expression (1) shown below (see, for example, Wataru Matsumoto, Hideki Ochiai: "Application of OFDM Modulation Scheme", Triceps, WS No.216 (2001-10), pp.80).

$$
\begin{aligned}
LLR(D_{rx}(k)) &= \ln\left(\frac{P_0(D_{rx}(k))}{P_1(D_{rx}(k))}\right) \\
&= \ln\left(P_0(D_{rx}(k))\right) - \ln\left(P_1(D_{rx}(k))\right) \\
&= \ln\left(C\exp\left(-\frac{1}{2\sigma^2}(D_{rx}(k)-\alpha(k))^2\right)\right) - \ln\left(C\exp\left(-\frac{1}{2\sigma^2}(D_{rx}(k)+\alpha(k))^2\right)\right) \\
&= \frac{2\alpha(k)D_{rx}(k)}{\sigma^2}
\end{aligned}
\tag{1}
$$

Thus, Expression (1) assumes that a variance of noise is constant in one-code units.

Furthermore, in a CDMA (Code Division Multiple Access) environment, interference from other cells is whitened by despreading and therefore interference is considered to be substantially constant within a codeword. For this reason, $\sigma^2$ indicating a symbol variance due to noise becomes $\sigma^2$ = thermal noise + interference and can be considered to be identical within one codeword.

However, in a CDMA environment, interference from other cells is whitened by despreading and interference is considered to be substantially constant within one codeword, and therefore $\sigma^2$ indicating a symbol variance due to noise can be considered to be identical within 1 codeword, but in an FH-OFDM environment using frequency hopping, interference occurs randomly and if $\sigma^2$ is considered to be constant within 1 codeword, there is a problem that a sufficient MAP decoding characteristic cannot be obtained in that case.

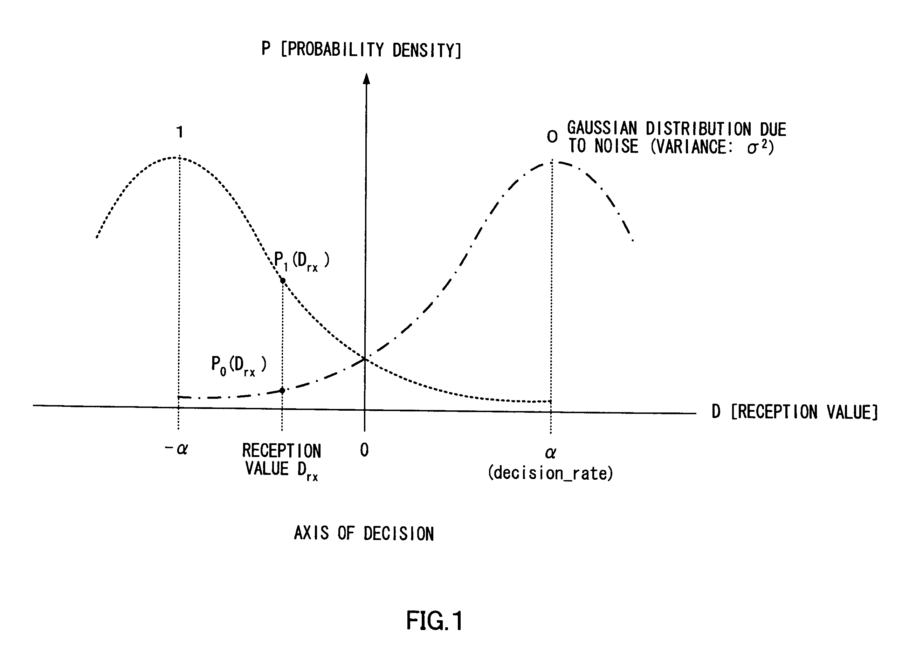

In calculating an LLR value, if thermal noise + interference is assumed to be constant, $\sigma^2$ can be kept constant, and therefore there is no problem with calculations using a calculation model shown in FIG.1.

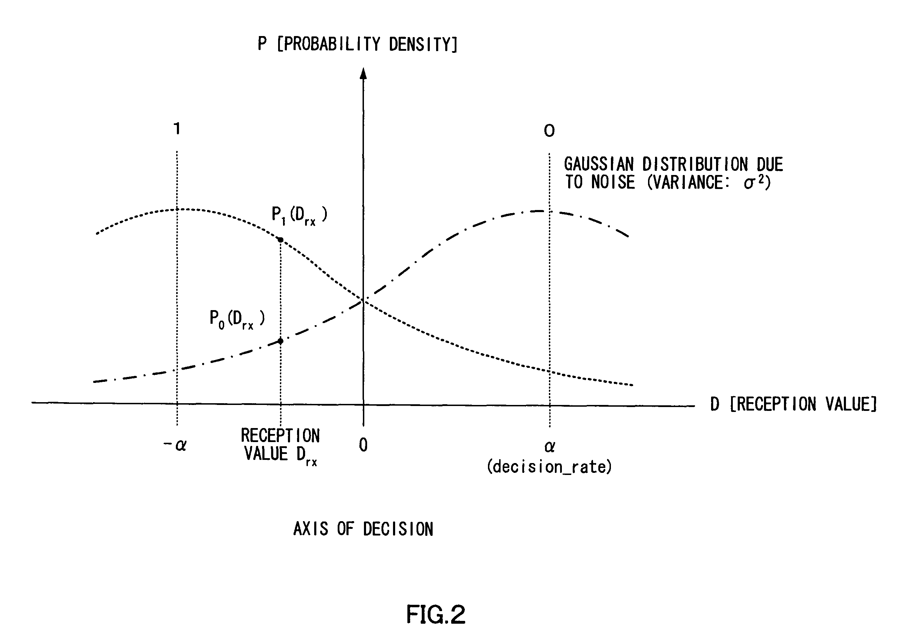

However, when interference power varies from one symbol to another in the FH-OFDM environment, interference power increases for certain symbols, and therefore though it is correct to calculate an LLR using a calculation model when noise power shown in FIG.2 is large, the LLR is calculated using the calculation model in FIG.1, and therefore there is a problem that a wrong LLR is calculated and it is not possible to make full use of effects of turbo coding.

Furthermore, when an interference elimination circuit is added to a reception apparatus to eliminate interference from other cells, a weighting factor such as MMSE (Minimum Mean Square Error) is assigned to each symbol, and therefore if $\sigma^2$ is considered to be constant within 1 codeword, interference is eliminated but noise power varies from one symbol to another, and therefore there is a problem that the MAP decoding characteristic deteriorates and it is not possible to make full use of effects of turbo coding.

Disclosure of Invention

The present invention is intended to solve these problems and it is an object of the present invention to provide an OFDM reception apparatus and OFDM reception method capable of correctly calculating an LLR with influences of interference power reflected in each symbol and making full use of effects of turbo coding in a frequency hopping OFDM environment.

The OFDM reception apparatus according to an embodiment of the present invention is an OFDM reception apparatus that receives frequency hopping OFDM signals sent from a plurality of cells, comprising an extraction section that extracts pilot signals from the respective subcarriers of the frequency hopping OFDM signals, an interference power calculation section that calculates interference part power and non-interference part power from the pilot signals extracted from the extraction section and calculates interference power for each symbol based on the interference part power and non-interference part power and a decoding section that decodes symbols of the respective subcarriers based on the interference power calculated for each symbol by the interference power calculation section.

The OFDM reception apparatus according to another embodiment is an OFDM reception apparatus that carries out diversity reception of frequency hopping OFDM signals sent from a plurality of cells using a plurality of antennas, comprising an extraction section that extracts pilot signals from subcarriers of the respective frequency hopping OFDM signals received by the respective antennas, an interference power calculation section that calculates interference part power and non-interference part power for each pilot signal extracted by the extraction section and calculates interference power for each symbol based on the interference part power and non-interference part power, a power ratio calculation section that calculates a signal to interference power ratio for each pilot signal extracted by the extraction section, a combination ratio calculation section that calculates a combination ratio of received signals of each antenna based on the signal to interference power ratio for each symbol calculated by the power ratio calculation section and a decoding section that decodes symbols of each subcarrier based on the interference power for each symbol calculated by the interference power calculation section and the combination ratio of the respective received signals calculated by the combination ratio calculation section.

The OFDM reception method according to a further embodiment of the present invention is an OFDM reception method for receiving frequency hopping OFDM signals sent from a plurality of cells, comprising an extraction step of extracting pilot signals of the respective subcarriers of the frequency hopping OFDM signals, an interference power calculation step of calculating interference part power and non-interference part power from the extracted pilot signals and calculating interference power for each symbol based on the interference part power and non-interference part power and a decoding step of decoding symbols of each subcarrier based on the calculated interference power for each symbol.

The OFDM reception method according to a still further embodiment of the present invention is an OFDM reception method for carrying out diversity reception of frequency hopping OFDM signals sent from a plurality of cells by a plurality of antennas, comprising an extraction step of extracting pilot signals from subcarriers of the respective frequency hopping OFDM signals received from the respective antennas, an interference power calculation step of calculating interference part power and non-interference part power for each pilot signal extracted and calculating interference power for each symbol based on the interference part power and non-interference part power, a power ratio calculation step of calculating a signal to interference power ratio for each extracted pilot signal, a combination ratio calculation step of calculating a combination ratio of the received signals of each antenna based on the calculated signal to interference power ratio for each symbol and a decoding step of decoding symbols of each subcarrier based on the calculated interference power for each symbol and the calculated combination ratio of the respective received signals.

Brief Description of Drawings

FIG.1 illustrates a conventional LLR value calculation model;
FIG.2 illustrates a conventional LLR value calculation model when noise is large;
FIG.3 is a block diagram showing the configuration of a transmission apparatus according to Embodiment 1 of the present invention;
FIG.4 is a schematic view of a two-dimensional map indicating a subcarrier mapping result according to Embodiment 1 of the present invention;
FIG. 5 is a schematic view of a two-dimensional map indicating a subcarrier mapping state after interleaving according to Embodiment 1 of the present invention;
FIG.6 is a block diagram showing the configuration of a reception apparatus according to Embodiment 1 of the present invention;

FIG.7 illustrates an example of subcarrier assignment in the own cell and other cell according to Embodiment 1 of the present invention;

FIG.8 illustrates an example of an interference state in the own cell according to Embodiment 1 of the present invention; and

FIG.9 is a block diagram showing the configuration of a reception apparatus according to Embodiment 2 of the present invention.

Best Mode for Carrying out the Invention

With reference now to the attached drawings, embodiments of the present invention will be explained in detail below. The present invention is by no means limited to these embodiments and can be implemented in various modes within a range not departing from the essence thereof.

An essence of the present invention is to correctly calculate an LLR with influences of interference power reflected in each symbol and make full use of effects of turbo coding in a frequency hopping OFDM environment.

(Embodiment 1)

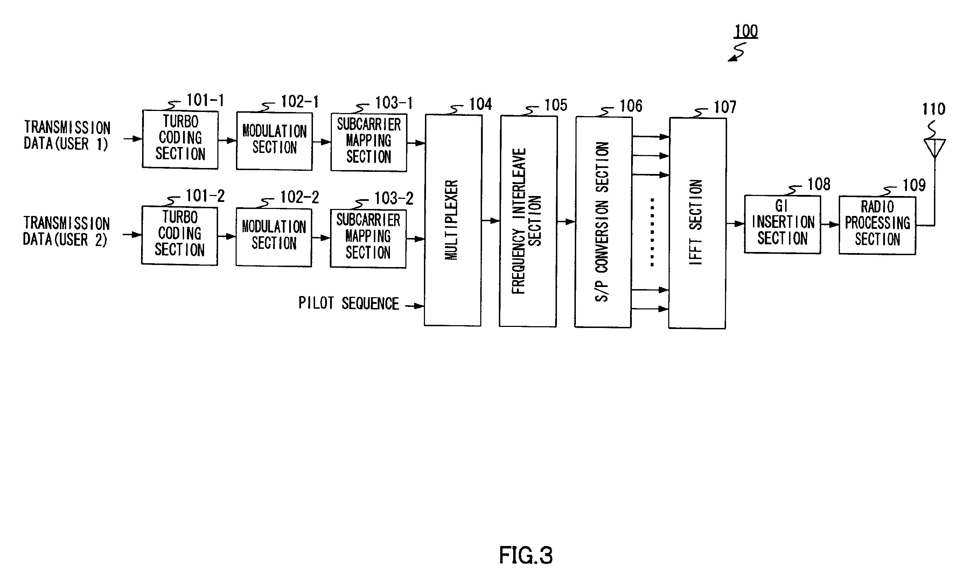

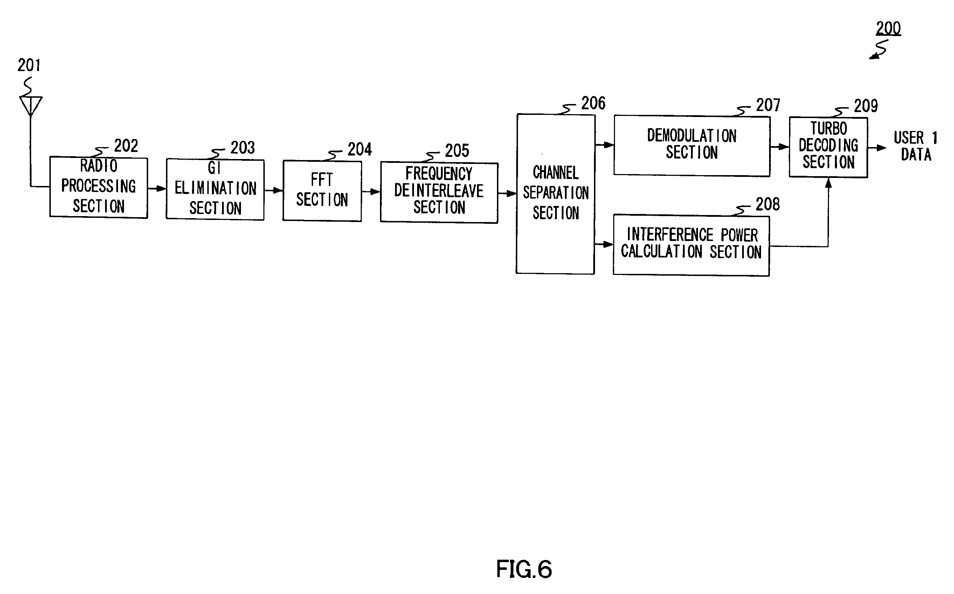

FIG.3 is a block diagram showing the configuration of a transmission apparatus based on a frequency hopping OFDM scheme according to an embodiment of the present invention and FIG.6 is a block diagram showing the configuration of a reception apparatus based on a frequency hopping OFDM scheme according to this embodiment concerning user 1.

The transmission apparatus 100 is mainly constructed of turbo coding sections 101-1, 101-2, modulation sections 102-1, 102-2, subcarrier mapping sections 103-1, 103-2, a multiplexer 104, a frequency interleave section 105, a serial/parallel (S/P) conversion section 106, an inverse fast Fourier transform (IFFT) section 107, a guard interval (GI) insertion section 108, a radio processing section 109 and an antenna 110.

The turbo coding sections 101-1, 101-2 carry out turbo coding on transmission data of user 1, user 2 and output the turbo coded signals to the modulation sections 102-1, 102-2.

The modulation sections 102-1, 102-2 have different code modulation functions and adopt modulation schemes, for example, 16QAM (Quad Amplitude Modulation) and 64QAM as a QAM system, and BPSK (Binary Phase Shift Keying), QPSK (Quad Phase Shift Keying) and 8PSK as a PSK system.

The modulation sections 102-1, 102-2 carry out code modulation on turbo coded signals input from the turbo coding sections 101-1, 101-2 respectively according to different modulation schemes and output the modulated signals to the subcarrier mapping sections 103-1, 103-2.

The subcarrier mapping sections 103-1, 103-2 assign subcarriers to the modulated signals input from the modulation sections 102-1, 102-2 according to hopping patterns of a plurality of premapped subcarriers to thereby form subcarrier signals and output the subcarrier signals to the multiplexer 104.

The multiplexer 104 multiplexes the subcarrier signals input from the subcarrier mapping sections 103-1, 103-2 into a serial signal by inserting information on a pilot sequence input from the outside between the subcarrier signals and outputs the serial signal to the frequency interleave section 105.

The frequency interleave section 105 reads out the serial signal input from the multiplexer 104 in such a way that array directions of a plurality of data sequences included in the serial signal are interleaved and outputs the signal as an interleave signal to the S/P conversion section 106.

The S/P conversion section 106 converts the interleave signal input from the frequency interleave section 105 to a plurality of parallel data sequence signals and outputs the signals to the IFFT section 107.

The IFFT section 107 inverse fast Fourier transforms the respective subcarrier components of the plurality of data sequence signals input from the S/P conversion section 106 into a time domain and outputs a time waveform signal to the GI insertion section 108.

The GI insertion section 108 inserts a guard interval for improving a characteristic against delays into the time waveform signal input from the IFFT section 107 and outputs the signal to the radio processing section 109.

The radio processing section 109 up-converts the time waveform signal input from the GI insertion section 108 to an RF band and sends an OFDM signal from the antenna 110.

This transmission apparatus 100 executes processing on the transmission data corresponding to the number of users 2 of user 1, 2, carries out coding and modulation on their respective transmission data, maps each modulated signal to a subcarrier (frequency assignment) and also maps a pilot sequence.

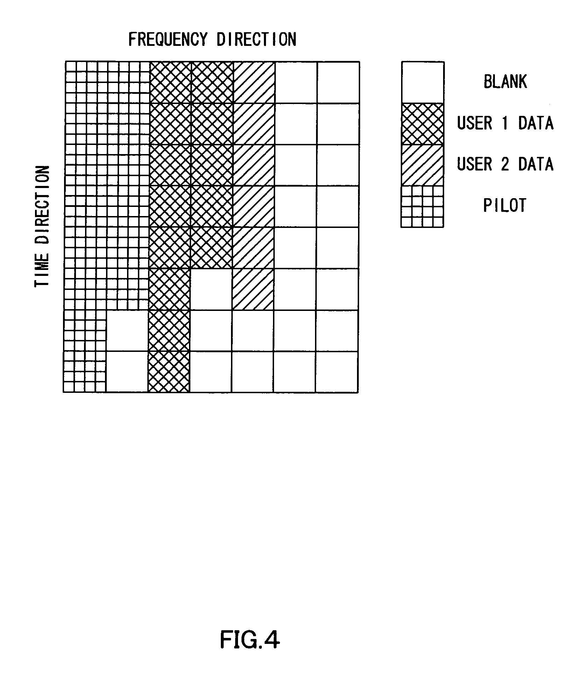

The results of mapping of subcarriers to user 1, 2 data and pilot data are shown in FIG.4 as a schematic view of a two-dimensional map. A pilot sequence signal is also modulated.

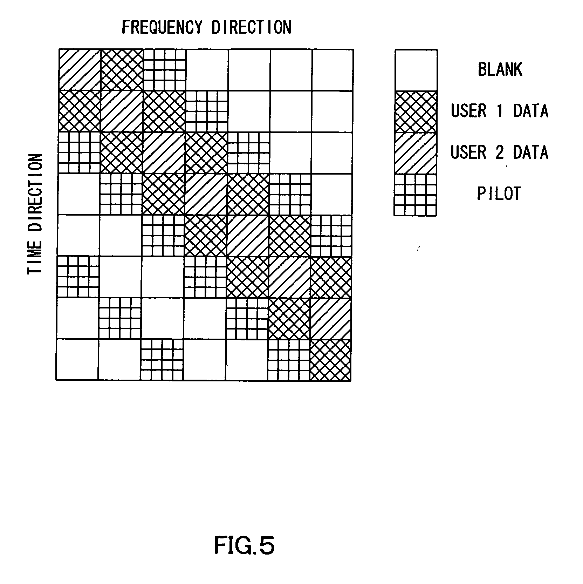

The plurality of subcarrier signals are multiplexed and frequency interleave processing is carried out based on the multiplexed signal. The mapping state of the subcarriers after this interleaving is shown in FIG.5 as a schematic view of a two-dimensional map.

The reception apparatus 200 shown in FIG. 6 is mainly constructed of an antenna 201, a radio processing section 202, a guard interval (GI) elimination section 203, a fast Fourier transform (FFT) section 204, a frequency deinterleave section 205, a channel separation section 206, a demodulation section 207, an interference power calculation section 208 and a turbo decoding section 209.

The radio processing section 202 receives an OFDM signal from the antenna 201 and outputs the OFDM signal to the GI elimination section 203.

The GI elimination section 203 eliminates a guard interval from the OFDM signal input from the radio processing section 202 and outputs the signal to the FFT section 204.

The FFT section 204 fast Fourier transforms (FFT) the OFDM signal after the guard interval elimination input from the GI elimination section 203 and converts the OFDM signal from a time domain to a frequency domain. A data sequence signal transmitted from this FFT section 204 through a plurality of subcarriers is extracted and output to the frequency deinterleave section 205.

The frequency deinterleave section 205 reads out the plurality of data sequence signals input from the FFT section 204 in an array direction opposite to the direction of interleaving by the transmission apparatus 100, restores a serial signal including the data sequence in the original serial arrangement and outputs the serial signal to the channel separation section 206.

The channel separation section 206 separates a serial signal including a plurality of subcarrier signals input from the frequency deinterleave section 205 into the respective subcarrier signals and outputs the subcarrier signals for the user 1 signal to the demodulation section 207 and interference power calculation section 208.

The demodulation section 207 demodulates the respective subcarrier signals input from the channel separation section 206 and outputs the subcarrier signals to the turbo decoding section 209.

To decide influences of an interference signal on the respective subcarrier signals input from the channel separation section 206, the interference power calculation section 208 calculates interference power for each symbol according to the modulation scheme (QAM scheme or PSK scheme) applied by the transmission apparatus 100 and outputs the calculated interference power value to the turbo decoding section 209.

The turbo decoding section 209 calculates LLR values of symbols of the respective subcarrier signals input from the demodulation section 207 based on the interference power value for each symbol input from the interference power calculation section 208.

In this embodiment, the turbo decoding section 209 changes the value of $\sigma^2$ for each symbol in calculating an LLR to perform turbo decoding processing, and therefore the interference power calculation section 208 needs to report interference power to the turbo decoding section 209 for each symbol.

An interference power calculation method for the interference power calculation section 208 in the reception apparatus 200 will be explained below.

For example, suppose all signals are modulated according to a QPSK scheme and a communication is carried out. Then, it is possible to calculate interference power by measuring power corresponding to pilot parts affected by interference and power corresponding to pilot parts unaffected by interference.

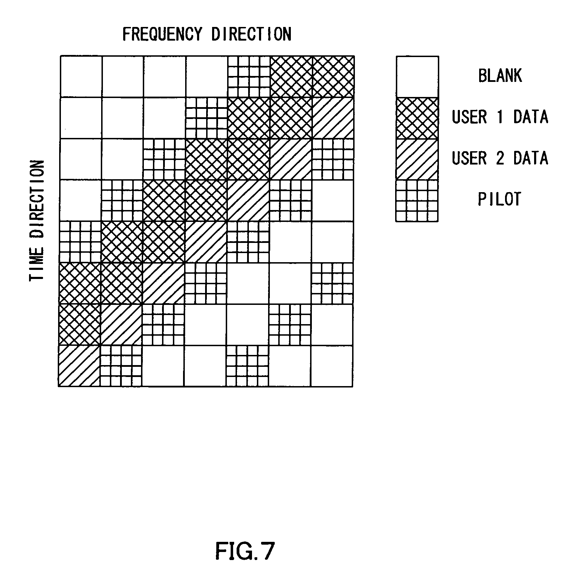

For simplicity of explanation, assuming an environment with only two cells in an inter-cell synchronization system in which users exist in the respective cells, FIG.7 shows an example of subcarrier assignment in the own cell (user 1) and other cell (user 2 or pilot).

In this FIG.7, suppose the frequency direction exists within a coherent band and neither signal power from the own cell nor signal power from the other cell changes in this band.

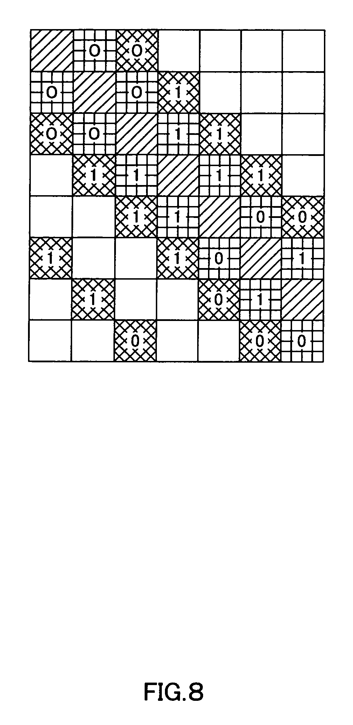

Furthermore, FIG.8 shows an example of an interference state showing whether user 1 and pilots in the own cell are affected by interference or not. In FIG. 8, 0s indicate that there is no interference, while 1s indicate there is interference from adjacent cells.

In such an environment, average reception power of the power part of a pilot affected by interference and the power part of a data part affected by interference can be calculated using the following calculation method:

Average power of parts affected by interference = signal

power + interference power + noise power

On the other hand, the power part of a pilot part unaffected by interference and the power part of a data part unaffected by interference can be calculated using the following calculation method:

Average power of parts unaffected by interference =

signal power + noise power

Through calculations of average reception power of the power parts affected by interference and average power of the parts unaffected by interference, interference power can be calculated using the following calculation method:

Interference power = average power of parts unaffected

by interference + average power of parts affected by

interference

Therefore, the interference power calculation section 208 calculates interference power values of the respective symbols using the above described calculation expressions and notifies the turbo decoding section 209 of the calculated interference power value.

The turbo decoding section 209 calculates $\sigma^2$ used to calculate an LLR of turbo decoding based on the interference power value notified from the interference power calculation section 208 using the following calculation method:

$$\sigma^2 = \text{thermal noise} + \text{interference power}$$

Therefore, the turbo decoding section 209 can change $\sigma^2$ for each symbol based on the interference power value for each symbol notified from the interference power calculation section 208 as shown in this calculation expression.

Thus, according to the reception apparatus 200 of this embodiment, it is possible to correctly calculate an LLR with influences of interference power reflected in each symbol and make full use of effects of turbo coding in a frequency hopping OFDM environment.

(Embodiment 2)

In Embodiment 1, an LLR is calculated by changing $\sigma^2$ for each symbol based on the interference power value calculated for each symbol, and in this embodiment, an LLR is calculated by changing $\sigma^2$ for each symbol using a weighting factor calculated according to interference power which varies from one symbol to another.

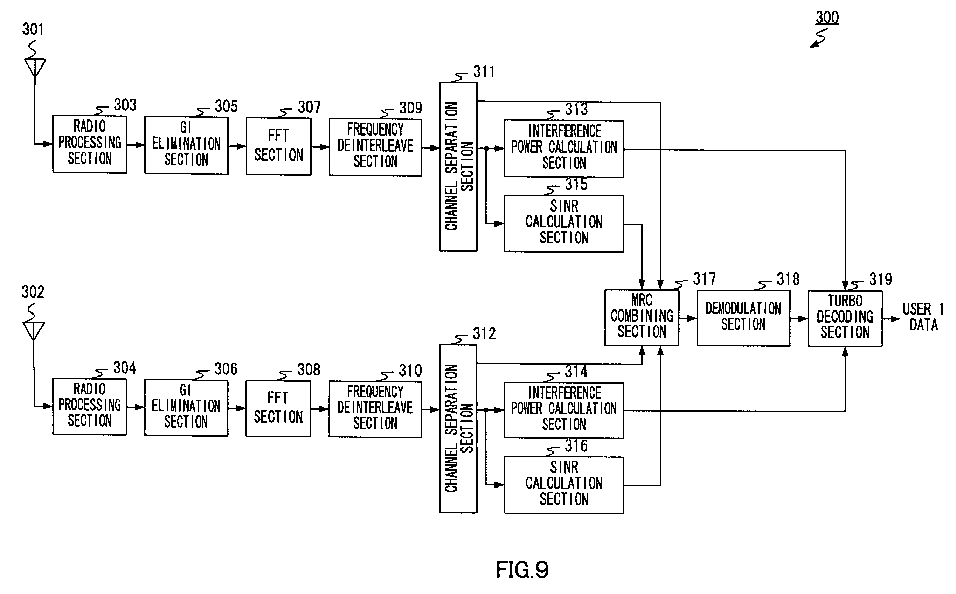

This embodiment will explain a case where an OFDM signal transmitted from the transmission apparatus 100 shown in FIG.3 is received by a reception apparatus 300 which carries out diversity reception using two antennas shown in FIG.9.

The reception apparatus 300 is mainly constructed of antennas 301, 302, radio processing sections 303, 304, guard interval (GI) elimination sections 305, 306, fast Fourier transform (FFT) sections 307, 308, frequency deinterleave sections 309, 310, channel separation sections 311, 312, interference power calculation sections 313, 314, SINR calculation sections 315, 316, an MRC combining section 317, a demodulation section 318 and a turbo decoding section 319.

In the reception apparatus 300, the configurations of the antennas 301, 302, radio processing sections 303, 304, guard interval (GI) elimination sections 305, 306, fast Fourier transform (FFT) sections 307, 308, frequency deinterleave sections 309, 310 and channel separation sections 311, 312 correspond to two lines of the same configuration of the antenna 201, radio processing section 202, guard interval (GI) elimination section 203, fast Fourier transform (FFT) section 204, frequency deinterleave section 205 and channel separation section 206 of the reception apparatus 200 shown in FIG.6, and therefore explanations of these configurations will be omitted.

To decide influences of an interference signal on the subcarrier signals input from the channel separation sections 311, 312, the interference power calculation sections 313, 314 calculate interference power for each symbol according to the modulation scheme (QAM scheme or PSK scheme) applied by the transmission apparatus 100 using the same calculation method as that of the above described interference power calculation section 208 and output the calculated interference power values to the MRC combining section 317.

The SINR (signal to interference power ratio) calculation sections 315, 316 calculate SINRs with respect to the subcarrier signals input from the channel separation sections 311, 312 and output the calculated SINR values to the turbo decoding section 319.

The magnitudes of interference power included in the received signals at the antenna 301 and antenna 302 are believed to be different, and therefore the SINR calculation sections 315, 316 calculate the SINRs using the following calculation method.

First, the SINR calculation sections 315, 316 calculate signal power (S) using the following calculation expression.

Signal power (S) = average power unaffected by

interference - thermal noise

Next, the SINR calculation sections 315, 316 calculate SINRs using the calculated signal power (S) according to the following calculation expression:

SINR = signal power/ (interference power + thermal

noise)

The SINR calculation sections 315, 316 output the calculated SINRs to the turbo decoding section 319.

The MRC (Maximum Ratio Combining) combining section 317 calculates weighting factors W_1, W_2 which determine the respective combination ratios when combining the respective subcarrier signals which have been received by the respective antennas 301, 302, separated by the channel separation sections 311, 312 and input, using the respective SINR values of the antennas 301, 302 input from the SINR calculation sections 315, 316 according to the following calculation method.

In the following calculation, W_1, W_2 are calculated assuming that the magnitudes of the respective SINRs of the antennas 301, 302 calculated from the SINR calculation sections 315, 316 are SINR_1, SINR_2 (real number values).

W_1=SINR_1/(SINR_1+SINR_2)    (real number)

W_2=SINR_2/(SINR_1+SINR_2)    (real number)

Actually, there are cells with interference and cells with no interference, and the magnitude of W varies depending on the presence/absence of interference (the magnitudes of interference and signal are assumed to be the same within a target coherent time, coherent band).

The MRC combining section 317 combines the respective subcarrier signals input from the channel separation sections 311, 312 using the calculated W_1, W_2 and outputs the combined subcarrier signal to the demodulation section 318.

The demodulation section 318 demodulates the combined subcarrier signal input from the MRC combining section 317 and outputs the demodulated signal to the turbo decoding section 319.

The turbo decoding section 319 calculates an LLR value of a symbol of the combined subcarrier signal input from the demodulation section 318 based on each interference power value for each symbol input from the interference power calculation sections 313, 314.

The turbo decoding section 319 calculates $\sigma^2$ used to calculate an LLR of turbo decoding based on the respective interference power values input from the interference power calculation sections 313, 314 using the following calculation method.

Here, assuming that the magnitudes of interference power in the antennas 301, 302 are I_1, I_2, thermal noise is the same and this thermal noise power is N, then $\sigma^2$ used to calculate an LLR is calculated for each symbol as follows.

$$\sigma^2 =W\_1(I\_1+N)+W\_2(I\_2+N)$$

Therefore, the turbo decoding section 319 can change $\sigma^2$ for each symbol based on the interference power value for each symbol notified from the interference power calculation sections 313, 314 as shown in the above described calculation expression and reflect the weighting factors of diversity reception when calculating $\sigma^2$.

In this way, according to the reception apparatus 300 of this embodiment, it is possible to correctly calculate an LLR with influences of interference power reflected in each symbol received with diversity and make full use of effects of turbo coding even during diversity reception in a frequency hopping OFDM environment.

This embodiment has explained the MRC as an example, but the above described conversion is necessary to calculate $\sigma^2$ when carrying out weighted calculations for interference elimination, etc.

This application is based on the Japanese Patent Application No.2003-091748 filed on March 28, 2003, entire content of which is expressly incorporated by reference herein.

Industrial Applicability

The present invention can correctly calculate an LLR with influences of interference power reflected in each symbol and make full use of effects of turbo coding in a frequency hopping OFDM environment.

**Claims**

1. An OFDM reception apparatus that receives frequency hopping OFDM signals sent from a plurality of cells, comprising:

   an extraction section that extracts pilot signals from respective subcarriers of said frequency hopping OFDM signals;
   an interference power calculation section that calculates interference part power and non-interference part power from the pilot signals extracted by said extraction section and calculates interference power for each symbol based on said interference part power and non-interference part power; and
   a decoding section that decodes symbols of said respective subcarriers based on the interference power calculated for each symbol by said interference power calculation section.

2. The OFDM reception apparatus according to claim 1, wherein said decoding section calculates a variance value used for said decoding based on the interference power for each said symbol and decodes symbols of said respective subcarriers using said variance value.

3. An OFDM reception apparatus that carries out diversity reception of frequency hopping OFDM signals sent from a plurality of cells using a plurality of antennas, comprising:

   an extraction section that extracts pilot signals from subcarriers of the respective frequency hopping OFDM signals received by said respective antennas;
   an interference power calculation section that calculates interference part power and non-interference part power for each pilot signal extracted by said extraction section and calculates interference power for each symbol based on said interference part power and non-interference part power;
   a power ratio calculation section that calculates a signal to interference power ratio for each pilot signal extracted by said extraction section;
   a combination ratio calculation section that calculates a combination ratio of received signals of said respective antennas based on the signal to interference power ratio for each said symbol calculated by said power ratio calculation section; and
   a decoding section that decodes symbols of each said subcarrier based on the interference power for each said symbol calculated by said interference power calculation section and the combination ratio of the respective received signals calculated by said combination ratio calculation section.

4. The OFDM reception apparatus according to claim 3, wherein said combination ratio calculation section calculates weight values to determine a combination ratio of received signals of said respective antennas based on a signal to interference power ratio for each said symbol,
   said decoding section calculates a variance value used for said decoding based on a weight value that determines a combination ratio between interference power for each said symbol and the respective received signals calculated by said combination ratio calculation section and decodes symbols of said respective subcarriers using said variance value.

5. An OFDM reception method for receiving frequency hopping OFDM signals sent from a plurality of cells, comprising:

an extraction step of extracting pilot signals of respective subcarriers of said frequency hopping OFDM signals;

an interference power calculation step of calculating interference part power and non-interference part power from said extracted pilot signals and calculating interference power for each symbol based on said interference part power and non-interference part power; and

a decoding step of decoding symbols of each said subcarrier based on said calculated interference power for each symbol.

6. An OFDM reception method for carrying out diversity reception of frequency hopping OFDM signals sent from a plurality of cells by a plurality of antennas, comprising:

an extraction step of extracting pilot signals from subcarriers of the respective frequency hopping OFDM signals received from said respective antennas;

an interference power calculation step of calculating interference part power and non-interference part power for each said extracted pilot signal and calculating interference power for each symbol based on said interference part power and non-interference part power;

a power ratio calculation step of calculating a signal to interference power ratio for each said extracted pilot signal;

a combination ratio calculation step of calculating a combination ratio of the received signals of said respective antennas based on said calculated signal to interference power ratio for each said symbol; and

a decoding step of decoding symbols of each said subcarrier based on said calculated interference power for each said symbol and said calculated combination ratio of the respective received signals.

P [PROBABILITY DENSITY]

1

O GAUSSIAN DISTRIBUTION DUE
TO NOISE (VARIANCE: $\sigma^2$)

$P_1(D_{rx})$

$P_0(D_{rx})$

D [RECEPTION VALUE]

$-\alpha$

RECEPTION
VALUE $D_{rx}$

0

$\alpha$
(decision_rate)

AXIS OF DECISION

FIG.1

EP 1 598 971 A1

FIG.2

P [PROBABILITY DENSITY]

1

0

GAUSSIAN DISTRIBUTION DUE TO NOISE (VARIANCE: $\sigma^2$)

$P_1(D_{rx})$

$P_0(D_{rx})$

D [RECEPTION VALUE]

$-\alpha$

RECEPTION VALUE $D_{rx}$

0

$\alpha$ (decision_rate)

AXIS OF DECISION

EP 1 598 971 A1

FIG.3

100

TRANSMISSION DATA (USER 1) → 101-1 TURBO CODING SECTION → 102-1 MODULATION SECTION → 103-1 SUBCARRIER MAPPING SECTION → 104 MULTIPLEXER

TRANSMISSION DATA (USER 2) → 101-2 TURBO CODING SECTION → 102-2 MODULATION SECTION → 103-2 SUBCARRIER MAPPING SECTION → 104 MULTIPLEXER

PILOT SEQUENCE → 104 MULTIPLEXER

104 MULTIPLEXER → 105 FREQUENCY INTERLEAVE SECTION → 106 S/P CONVERSION SECTION → 107 IFFT SECTION → 108 GI INSERTION SECTION → 109 RADIO PROCESSING SECTION → 110

FREQUENCY DIRECTION

BLANK

USER 1 DATA

USER 2 DATA

PILOT

FIG.4

FIG.5

200

201

202 RADIO PROCESSING SECTION

203 GI ELIMINATION SECTION

204 FFT SECTION

205 FREQUENCY DEINTERLEAVE SECTION

206 CHANNEL SEPARATION SECTION

207 DEMODULATION SECTION

208 INTERFERENCE POWER CALCULATION SECTION

209 TURBO DECODING SECTION

USER 1 DATA

FIG.6

FIG.7

FIG.8

FIG.9

<table>
<tr><td colspan="2"><b>INTERNATIONAL SEARCH REPORT</b></td><td colspan="2">International application No.<br>PCT/JP2004/004402</td></tr>
</table>

| | |
|---|---|
| A. CLASSIFICATION OF SUBJECT MATTER<br>Int.Cl$^7$  H04J11/00 | |

According to International Patent Classification (IPC) or to both national classification and IPC

**B.  FIELDS SEARCHED**

Minimum documentation searched (classification system followed by classification symbols)
Int.Cl$^7$  H04J11/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 11-289578 A  (Lucent Technologies Inc.),<br>19 October, 1999 (19.10.99),<br>Full text; all drawings<br>& EP 0929202 A1          & AU 9910006 A<br>& CN 1226795 A          & CA 2254643 A1<br>& JP 3007626 B2         & BR 9805810 A<br>& AU 720980 B           & KR 99067716 A | 1-6 |
| A | JP 2001-358694 A  (Lucent Technologies Inc.),<br>26 December, 2001 (26.12.01),<br>Full text; all drawings<br>& EP 1148673 A2         & AU 200135175 A<br>& BR 200101426 A        & CA 2338471 A1<br>& CN 1318916 A          & KR 2001098657 A | 1-6 |

| | | |
|---|---|---|
| ☒  Further documents are listed in the continuation of Box C. | ☐  See patent family annex. | |

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>02 August, 2004 (02.08.04) | Date of mailing of the international search report<br>17 August, 2004 (17.08.04) |
| Name and mailing address of the ISA/<br>Japanese Patent Office | Authorized officer |
| Facsimile No. | Telephone No. |

Form PCT/ISA/210 (second sheet) (January 2004)

| **INTERNATIONAL SEARCH REPORT** | International application No. |
|---|---|
| | PCT/JP2004/004402 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-358695 A (Lucent Technologies Inc.),<br>26 December, 2001 (26.12.01),<br>Full text; all drawings<br>& EP 1148674 A2 & AU 200135177 A<br>& CA 2339515 A1 & BR 200101459 A<br>& CN 1318953 A & KR 2001098569 A | 1-6 |
| A | JP 11-355240 A (Nippon Hoso Kyokai),<br>24 December, 1999 (24.12.99),<br>Full text; all drawings<br>(Family: none) | 1-6 |
| A | JP 2000-036801 A (NEC Corp.),<br>02 February, 2000 (02.02.00),<br>Par. Nos. [0023] to [0027]; Fig. 2<br>& EP 0975101 A2 & US 6151372 A | 1-6 |
| A | JP 2001-345780 A (Sony Corp.),<br>14 December, 2001 (14.12.01),<br>Full text; all drawings<br>(Family: none) | 1-6 |
| A | JP 11-205208 A (Toshiba Corp.),<br>30 July, 1999 (30.07.99),<br>Full text; all drawings<br>& US 6512738 B1 | 1-6 |
| A | JP 06-343066 A (Nippon Telegraph And Telephone<br>Corp.),<br>13 December, 1994 (13.12.94),<br>Par. Nos. [0014], [0015]<br>(Family: none) | 1-6 |

Form PCT/ISA/210 (continuation of second sheet) (January 2004)